# EUROPEAN PATENT APPLICATION

(11) **EP 4 714 784 A1**
(43) Date of publication of application: **25.03.2026**
(21) Application number: 24201476.9
(22) Date of filing: 19.09.2024
(51) Int. Cl.: B62B 3/02, B62B 3/10, A63B 55/60

(54) **GOLF TROLLEY**

(71) Applicant: Botronics S.r.l., 6210 Rèves (BE)
(72) Inventor: Piraux, Eric, 6210 Rèves (BE)
(74) Representative: Calysta NV

(57) **Abstract**

Golf trolley comprising a base frame (30), two steerable wheels (42), two drivable wheels (42) and a motor configured to drive the drivable wheels (42), the golf trolley comprising a first side (10) and a second side (20), the base frame (30) comprising a first frame part (31) holding the drivable wheels (42) and a second frame part (32) holding the steerable wheels (42), wherein the base frame (30) comprises a third frame part (33) connecting the first frame part and the second frame part, the golf trolley further comprising a bag support extending from the base frame (30) and arranged to hold the golf bag in a holding position.

## Description

### Technical Field

The present invention relates to the field of golf equipment and particularly to a golf trolley for helping golfers in transporting their golf bags across the course.

### Prior art

Golf trolleys of different types are known, including manual golf trolleys, which are pushed or pulled by the golfer, and electric or motorized golf trolleys.

Manual golf trolleys have the problem that they need to be pushed by the golfer which makes him or her loose concentration or it needs an additional person for pushing the golf trolley.

On the other hand, motorized trolleys are potentially easier to use on the course. Most motorized golf trolleys work with a remote control or a radio distance sensor. This avoids that the golfer needs physical force to carry the golf trolley but it still requires concentration to control the golf trolley via the remote control or at least to order the golf trolley to stop in certain no-go zones or zones where they risk to fall over. There are some automated golf trolleys which try to remove the burden of control of the motorized trolley, especially golf trolleys with a follow function. However, these trolleys also face issues related to stability, principally due to the missing stabilizing intervention of the carrying user, but also due to sub-optimal weight distribution, due to missing "intelligent" human itineraries which avoid that the trolley falls over in difficult terrain and due to the higher speeds that they achieve.

Motorized trolleys have different designs. The most common design uses the design of a three-wheel push trolley with two large driven wheels and one steerable front wheel arranged in a horizontal base frame. A handle extends from the back side of the trolley, i.e. from the side with the two large driven wheels on which a golf bag can be arranged inclined to extend with its bottom from the small steerable front wheel upwards to the handle above the two large driven wheels. So, the golf bag extends in an inclined position from the front wheel upwards to the driven back wheels. Sometimes the same design is used with an inverted driving direction. But this design has severe stability problems, especially in non-even grounds. The heavy heads of the clubs are extending beyond the axle of the drivable wheels and the golf trolley risks to fall over the back axle when going uphill (or downhill in case of inverted driving direction). This is often overcome with a support wheel extending behind the driven wheels which however makes the golf trolley even more bulky and adds additional weight. Another stability problem of this design is the instability on the sides. Therefore, the single pivotable front wheel is sometimes replaced with two smaller pivotable front wheels. Another problem was that the electrical components like battery, motor control and motors were often added to existing manual push-trolley designs so that their position did not help the user handling and often increased the instability by the weight of the components not being well distributed.

Since the classic push-trolley design is not optimal for motorized golf trolleys, other designs have been proposed to overcome the above problems. However, all solutions are either very bulky or still show stability problems.

Moreover, motorized trolleys present challenges during storage and transportation due to their bulkiness and weight. Foldable golf trolleys have been developed to ease transport. However, these trolleys also suffer from limitations such as complex folding mechanisms that limit the design flexibility when it comes to distributing the weight of the heavy components. Especially when it comes to motorized trolleys, the folding mechanisms become more difficult due to the bulkiness of the trolleys, especially the battery and the motors. The ones which might be foldable to a small volume however bring other disadvantages like increased instability due to smaller wheel distances or have motor or battery as external parts which make the handling for the golfer more complicated.

Ultimately, these issues lead to a sub-optimal golfer experience. Thus, there is a need for a golf trolley that overcomes the limitations of the prior art.

The preceding discussion of the prior art is intended to facilitate an understanding of the present invention only. The discussion is not an acknowledgement or admission that any of the material referred to is or was part of the common general knowledge as at the priority date of the application.

### Brief summary of the invention

It is an object of the invention to overcome the disadvantages of the prior art, or at least provide an alternative to the prior art.

It is in particular an object of the invention to provide a golf trolley having improved performance on the golf course while not compromising on the ease of use for the golfer, and on the stability.

According to the invention, this object is achieved by a golf trolley comprising a base frame, two steerable wheels, two drivable wheels, and a motor configured to drive the drivable wheels; the golf trolley comprising a first side and a second side opposed to the first side, the base frame comprising on the first side a first frame part holding the drivable wheels and on the second side a second frame part holding the steerable wheels, wherein the base frame comprises a third frame part connecting the first frame part and the second frame part, the golf trolley further comprising a bag support extending from the base frame and arranged to hold the golf bag in a holding position, wherein the golf trolley is designed such that the golf bag in the holding position is arranged in an inclined position with the golf bag's lower end on the first side of the golf trolley and with the golf bag's upper end on the second side of the golf trolley.

While in manual push-trolleys the top of the golf bag showed to the carrying user on the side of the drivable wheels, it showed that inverting the inclination direction of the golf bag towards the steerable wheels (inverted bag inclination) significantly improved the stability of the motorized golf trolley. Since heavy weight of the club heads shows now to the opposed side, the small support wheel extending from the driven wheels can be avoided as there is no risk of falling over the rotation axis of the driven wheels anymore. Due to the better weight distribution in the golf trolley, the motorized golf trolley becomes much more stable. This is due to the heavier driven wheels on the first side compensating the higher weight point of the heavy club heads on the second side.

The dependent claims refer to further optional embodiments of the invention.

In one embodiment, the golf trolley is foldable from an operating state in a folded state.

In one embodiment, the third frame part comprises a first frame sub-part on the first side of the golf trolley and a second frame sub-part on the second side of the golf trolley, wherein the first frame sub-part is foldably connected at a frame folding position with the second frame sub-part. This has the advantage of minimizing the space occupied by the golf trolley in its folded state, particularly in the direction extending between the first and second side (i.e., the trolley length is reduced). For example, in the folded state, the angle between the second side of the third frame part or base frame and the first side of the third frame part or base frame and/or the angle between the second frame sub-part and the first frame sub-part is smaller than 45°, preferably smaller than 30°, more preferably smaller than 20°, preferably smaller than 10°, preferably equal to 0°. For example, the first frame sub-part and the second frame sub-part may be connected by means of an articulated mechanism such as a hinge, or a sliding engagement with a cord for holding the first frame sub-part and the second frame sub-part together, or the like.

In one embodiment, the third frame part is foldable by rotating/pivoting the first frame sub-part relative to the second frame sub-part around a frame folding axis at the frame folding position, wherein the frame folding axis is parallel to a rotation axis of the drivable wheels.

In one embodiment, the third frame part is foldable such that the second frame part is folded on the first frame part and/or such that the steerable wheels are arranged in contact with the first frame part. "folded on the first frame part" shall mean that the second frame part is in close vicinity to the first frame part, i.e. the rotation axis of the drivable wheels are in the driving direction closer than twenty percent, preferably less than ten percent of the length of the golf trolley or of the third frame part to the rotation axis or steering axes of the steerable wheels. This has the advantage that size of the base frame can be reduced for transportation. Due to the components arranged in the base frame of many state-of-the-art motorized golf trolleys, the base frame is normally not folded at all or folded only in a small part so that the second frame part does not reach the first frame part so not really reducing the size of the folded trolley. Especially with the inverted bag direction necessitating a bag support for supporting the bag in the inverted bag direction, it is not easy to realize such a folding of the base frame.

In one embodiment, in the folded state, the steerable wheels are pivoted around a steering axis towards the third frame part, preferably with their wheel axis perpendicular to the wheel axis of the drivable wheels, and/or are arranged within the width of the first frame part in the direction of the rotation axis of the drivable wheels. Since the steerable wheels are then arranged with their sides parallel to the first frame part and/or the rotation axis of the drivable wheels, their size in the driving direction of the golf trolley is significantly reduced. In addition, this allows to arrange the side of the wheels along first frame part, preferably in contact so that the steerable wheels are blocked/stabilized by the first frame part in the folded position. In addition, the steerable wheels can be arranged between the mounting position of the drivable wheels. Therefore, it is advantageous that the steering axis of the steerable wheels and/or the steerable wheels in the folded position are arranged between the mounting positions of the drivable wheels. Since the steerable wheels are arranged between the mounting position of the drivable wheels, no additional space is occupied by them.

In one embodiment, the bag support is folded in the folded state of the golf trolley on the third frame part, preferably on the first or second frame sub-part. This has the advantage of further reducing the space occupied by the golf trolley in its folded state, particularly in the upward direction (i.e., the trolley height is reduced). Thus, it is possible to fit the golf trolley in its folded state into small spaces, such as car trunk.

In one embodiment, the bag support is connected to the third frame part at the frame folding position. Connecting the bag support at the frame folding position optimizes the folding of the golf trolley as bag support can be folded over the full length of one of the frame sub-parts. In addition, the position of the bag support at the frame folding position (or in the centre between the wheels in the driving direction) is further optimized for the inverted bag direction. This has the advantage of having a greater weight of the golf bag placed over the driven wheels, compared to the steerable wheels. Thus, the load on the steerable wheels is reduced, making it easier to control and steer the trolley.

In one embodiment, the bag support is folded, in the folded state of the golf trolley, on the first frame sub-part, preferably, in the folded state, the bag support is folded on top of the first frame sub-part and the second frame sub-part is folded below the first frame sub-part.

In one embodiment, the golf trolley comprises first locking means configured to prevent in the operating state the relative rotation of the bag support and the base frame and/or second locking means configured to prevent relative rotation of the first and second frame sub-part.

In one embodiment, the golf trolley comprises a common locking means to prevent in the operating state the relative rotation of the bag support and the base frame and to prevent relative rotation of the first and second frame sub-part.

In one embodiment, the bag support and the third frame part are locked in the operating state and/or unlocked in the folded state (with a locking mechanism with a common locking mechanism or with a first and second locking mechanism). Preferably, the locking mechanism comprises a common activation member, wherein the common activation member is configured to unlock a first folding mechanism to allow the folding of the first and second frame sub-part, wherein the common activation member is configured to unlock the second folding mechanism to allow the folding of the bag support with respect to the third frame part. The locking mechanism allows to prevent unintentional folding of the golf trolley when the golf trolley is in use. Having a common activation element has the advantage that with a single gesture it is possible to fold multiple sections of the golf trolley. Optionally, the common activation element is a pull tab.

In one embodiment, the bag support is folded, in the folded state, in two or more support sub-parts which are folded on the first or second frame sub-part. This allows to fold the bag support on one of the frame sub-parts so that the support part in the folded state gets the same length as the first or second frame sub-part. Preferably, the sub-parts are extending in different directions and preferably the support folding position(s) is/are arranged close to bending portions or change of directions of the bag support. This allows to arrange the folded bag support parallel to the first or second frame sub-part even though the bag support does not extend along a straight line, because their support sub-parts do. In other terms, in this case the bag support is configured to be foldable at locations where there is, in the unfolded state, a bending portion or a change in direction of the bag support itself. Therefore, it is possible to fold the bag support more easily and to minimize the space occupied by the bag support in the folded state. Moreover, the bending portions and/or changes of direction are also advantageous in the unfolded state, for better weight distribution. For example, one or more sub-parts may have a direction parallel to the golf bag holding position to support the weight of the bag, whereas other parts may have a direction perpendicular to the base frame to place most of said weight at desired locations of the base frame.

In one embodiment, the bag support comprises a first support sub-part and a second support sub-part, the first support sub-part having a lower end connected to the third frame part between the first frame part and the second frame part and having an upper end connected to the second support sub-part, wherein the first support sub-part extends in a first support direction upwards, wherein the second support sub-part extending in the operating state in a second support direction from the upper end of the first support sub-part upwards and towards the second side of the golf trolley, preferably the second direction being parallel to the golf bag. This has the advantage that the second support sub-part can support at least part of the weight of the bag and makes it easier for the bag to remain securely in the inclined position, whereas the first support sub-part allows to place most of the bag weight over the third frame part. The first and second support sub-parts can be foldable between them or not.

In one embodiment, the bag support comprises a third support sub-part extending in a third direction, wherein the second support sub-part has a first end connected to the upper end of the first support sub-part and a second end connected to a first end of the third support sub-part, wherein a second end of the third support sub-part comprises a handle to pull or push the golf trolley.

In one embodiment, the bag support is a (single) tube extending from the base frame, preferably from the third frame part upwards, wherein the tube comprises a holding means for holding a central and/or upper part of the golf bag. The inclusion of holding means ensures that the central and/or upper part of the golf bag is securely fastened to the bag support. The bag support being a tube is on the one side easy to manufacture as standard parts can be used (at the bending positions either bended or connected via curved connectors). On the other side, the tube has a very space saving and reduced design making the golf trolley light and space saving (especially in the folded state).

In one embodiment, an upper end of the bag support comprises a handle with a display, wherein the display is connected via a cable within the tube to a controller in the base frame. The bag support being a tube allows to protect the component arranged therein (e.g., cables) from damage caused by weather conditions (e.g., exposure to rain and moisture). Moreover, a hollow bag support such as a tube allows to reduce the weight when compared to a solid bag support.

In one embodiment, the golf trolley comprises a display and/or a controller. Preferably, the display is arranged on the bag support, preferably on the handle. Preferably the controller is arranged in the base frame, preferably in the third frame part, preferably in the second frame sub-part. The display may be configured to output information to the golfer, e.g., real-time information about the battery charge level, the trolley speed, location of the trolley and the like. The display may further be configured to receive inputs from the golfer. The controller may be configured to control the motor, for instance based on instructions provided by the golfer via the display (e.g., to adjust the speed of the trolley). For example, the controller may comprise a communication unit configured to receive (by wire or wirelessly) information from a user input and/or from a sensor. Information from a user input may be received by a user-controlled device, e.g. a local device (i.e., a device integrated on the golf trolley) or a remote device. For example, the user-controlled device may be a touch display, a pushbutton and the like. Information from a sensor may be information related to the golf trolley's environment received by an environmental sensor and/or information related to the golf trolley's position and/or movement. For example, the sensor may be a GPS module, an inertial measurement unit, a temperature sensor, a moisture sensor and the like.

In one embodiment, the third frame part is designed such that it is arranged lower on the first side than on the second side. This has the advantage of raising further above the ground the third frame part in proximity of the steerable wheels, thereby ensuring that there is enough space for the steerable wheels to turn freely without colliding with the third frame part. In addition, it allows to realize the steerable wheels as pivotable wheels which are supported from above on the second frame part. This also has the advantage, when the golf trolley driving direction is such that the second side is the front side of the golf trolley, of ensuring easier displacement over bumps or irregularities of the ground. It further allows to have the third frame part on the second side higher to place there the camera and/or sensor for autonomously driving the golf trolley and/or for object collision detection.

In one embodiment, the second frame part is connected to the third frame part at the second side, preferably is connected above the third frame part, and the second frame part supports at each of its lateral ends one of the steerable wheels which are pivotable around a steering axis. This has the advantage of raising further above the ground the second frame part holding the steerable wheels.

In one embodiment, the third frame part is divided in a first frame sub-part on the first side and a second frame sub-part on the second side, the first frame sub-part is arranged horizontally, and the second frame sub-part is arranged inclined towards the first frame sub-part such that the second frame sub-part extends from the first frame sub-part upwards towards the second side. This ensures, when the golf trolley is in use, that the portion of the third frame part closer to the drivable wheels is parallel to the ground, whereas the portion of the third frame part closer to the steerable wheels is inclined with respect to the ground. However, the third frame part can also be entirely inclined, i.e., it gradually rises from the ground from the first side towards the second side when the golf trolley is in use.

In one embodiment, the third frame part comprises at the second side a sensor for autonomously driving the golf trolley. This has the advantage of receiving data about the environment allowing for autonomous driving, such as detection of obstacle enabling to avoid collisions. This embodiment is particularly advantageous when the third frame part is raised at the second side as the sensor are in this case further elevated from the ground, which ensures an optimal field of view with minimal obstructions by small ground-level objects e.g., debris. Most advantageously, the sensor is a stereo camera allowing to combine traditional image detection (e.g. via Al algorithms) to detect objects, e.g. a person to follow, with a distance detection of the detected object, e.g. the identified person to follow. However, the sensor for autonomously driving the golf trolley may also be a LiDAR, a Time-of-Flight sensor, a normal camera.

In one embodiment, the third frame part extends from the first side to the second side in the centre between the drivable wheels and/or in the centre between the steerable wheels, wherein the first frame part extends perpendicular to the third frame part parallel to the rotation axis of the drivable wheels protruding from the third frame part, and the second frame part extends perpendicular to the third frame part parallel to the rotation axis of the drivable wheels protruding from the third frame part.

In one embodiment, the width of the third frame part in a direction parallel to the rotation axis of the drivable wheels is less then seventy percent, preferably less the sixty percent of the width of the first frame part and/or is less then seventy percent, preferably less the sixty percent of the width of the second frame part. This light structure having basically a H form with two parallel first and second frame parts connected by a perpendicular "thin" third frame part. This allows to have even for a motorized golf trolley with inverted bag inclination a very light structure as it is known for manual push trolleys. This reduces weight and facilitates folding/tra nsportation.

In one embodiment, the third frame part is arranged under the first frame part.

In one embodiment, a battery of the golf trolley is arranged in the third frame part. Especially in combination with the third frame part arranged under the first frame part, this guarantees that the weight of the battery is under the first frame part, preferably under the rotation axis of the drivable wheel. This increases due to the low centre of gravity of the battery the general stability of the golf trolley, and/or compensates the weight of the heavy club heads on the second side of the golf trolley. So, this arrangement is particularly well suited for the inverted bag inclination. Preferably, the battery is arranged in the first frame sub-part. Preferably, the battery passes under the first frame part and/or the rotation axis of the driven wheels (because the third frame part is arranged under the first frame part). This allows to bring the centre of gravity of the battery closer to the first side and thus compensating the heavy club heads on the second side due to the inverted bag direction which increases further the global stability of the golf trolley.

In one embodiment, the battery is insertable from the first side of the golf trolley in the third frame part. This allows to insert the battery even when the golf bag is on the golf trolley. In addition, the battery can be positioned in some standard parts like a tube which has a cross-sectional shape corresponding (more or less) to the cross-sectional shape of the inserted battery. Since the battery is arranged on the first side of the third frame part, the battery can be arranged in the first frame sub-part and still achieving that the frame folding position is arranged roughly in the centre between the drivable wheels and the steerable wheels. This is particularly advantageous in combination with the third part being under the first frame part as the battery can thus be placed in the third frame part without interference of the first frame part.

In one embodiment, the centre of gravity of the battery, preferably the complete battery is arranged below the rotation axis of the drivable wheels. In this case, the centre of gravity of the battery is closer to the ground then the rotation axis of the drivable wheels. This has the advantage of lowering the centre of gravity of the golf trolley and increasing its stability. In addition, it compensates the weight of the heavy club heads on the second side and stabilizes thus the design of the golf trolley with the inverted bag inclination.

In one embodiment, a battery is arranged in the third frame part, and the motor is arranged in the first frame part; preferably, the battery is arranged in the first frame sub-part. This has the advantage of optimizing the weight distribution of the trolley on the ground as the heavy parts of motor and battery are arranged on the first side to compensate the weight of the club heads with a high centre of gravity. Preferably, a controller is arranged in the third frame part, preferably in the second frame sub-part. Preferably, a camera or sensor for autonomously driving is arranged in the third frame part, preferably in the second frame sub-part.

In one embodiment, the third frame part is a tube with constant cross-sectional surface over more than sixty percent, preferably over more than seventy percent, preferably over eighty percent, preferably over ninety percent of a length of the third frame part from the first side to the second side, preferably over the complete length. This allows to use standard components like tubes to make the third frame part and to fill those (with a very high packing density) with the electrical components of the golf trolley (like controller, battery, camera or sensor).

In one embodiment, the first frame part is a hollow tube. The hollow tube houses preferably the motor of the drivable wheels. The hollow tube extends preferably along a straight line, preferably including the rotation axis of the drivable wheels.

In one embodiment, the bag support is coupled to the base frame (preferably to the third frame part) in the centre between the first and second frame part and/or on a centre axis between the drivable wheels and/or between the steerable wheels. In this case the bag support is coupled in a central portion that extends in the direction connecting the first and second frame parts or the driving direction of less than 50% of the distance between said parts, preferably less than 40%, more preferably less than 30%, even more preferably less than 20%, and most preferably less than 10%. In classic designs, the bag support extends normally from the first or second side of the base frame. However, this has the advantage that the lever created by the weight of the heavy club heads of the golf bag attacks in the centre of the golf trolley instead of at one of the sides. This increases the stability of the golf trolley further, especially when moving in inclined terrain. So, the combination of the four-wheel base frame with an inverted bag direction and the bag support arranged in the centre of the base frame provides a particularly stable golf trolley. A further advantage of arranging the bag support in this central portion, especially at the frame folding position between the first and second frame sub-part optimizes the folding process as will be explained in more detail below.

In one embodiment, the bag support is realized as tube or bar extending along a single line first in a first support direction and then in a second support direction, wherein the tube or bar comprises a first support sub-part and a second support sub-part, the first support sub-part having a lower end connected to the third frame part, the first support sub-part having an upper end connected to the second support sub-part, wherein the first support sub-part extends in a first support direction upwards, wherein the second support sub-part extending in the second support direction from the upper end of the first support sub-part upwards and towards the second side of the golf trolley, wherein the second support sub-part comprises holding means for holding the golf bag in the holding position. This design of the bag support extending upwards from the centre of the base frame and then upwards and towards the front to support the golf bag is a very light and stable solution for a golf trolley with an inverted bag inclination.

In one embodiment, the golf trolley autonomously drives in a forward driving direction such that the second side is the front side of the golf trolley. The inverted golf inclination is particularly advantageous, when the golf trolley drives (in the forward direction) with the club heads pointing to the front.

In one embodiment, the bag support is rotatably/pivotably coupled to the base frame at least about a first bag support rotation axis that is parallel to the rotation axis of the drivable wheels.

Other embodiments according to the present invention are mentioned in the appended claims and the subsequent description of an embodiment of the invention.

### Brief description of the Drawings

Exemplary embodiments of the invention are described using the figures. It is to be understood that these figures merely serve as examples of how the invention can be implemented and are in no way intended to be construed as limiting for the scope of the invention and the claims. Like features are indicated by like reference numerals along the figures. In the figures:
Fig. 1 is a schematic perspective view of a golf trolley;
Figs. 2A-2D are schematic lateral views of a golf trolley transitioning from an unfolded state to a folded state;
Fig. 3 is a schematic lateral view of a golf trolley in a folded state;
Figs. 4 is a three-dimensional view of a first and second folding mechanism;
Figs. 5A-5B are schematic lateral views illustrating a first and second folding mechanism for folding the bag support and the third frame part;
Fig. 6 is a schematic sectional view showing part of a base frame of a golf trolley;
Figs. 7A-7B are schematic perspective views of a battery of a golf trolley;
Fig. 8 is a schematic sectional view showing part of a base frame of a golf trolley.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

By "centre between two points", or between two objects (for example, a centre between the first and second frame part), it is meant being arranged in a central portion that extends in the direction connecting the two points or objects of less than 50% of the distance between the two points, preferably less than 40%, more preferably less than 30%, even more preferably less than 20%, and most preferably less than 10%.

A golf trolley, also known as a golf cart orcaddy cart, is a device designed to carry a golfer's equipment, e.g. a golf bag, clubs, and other accessories, across a golf course. Thus, the golf trolley allows to reduce the physical burden on the golfers by transporting their equipment. To distinguish from larger golf trolleys or golf carts which transport also humans, the golf trolley according to the invention is preferably not configured to transport a person/user/golfer and/or does not have any part configured to transport this person/user/golfer (like on a seat or a standing platform for the user).

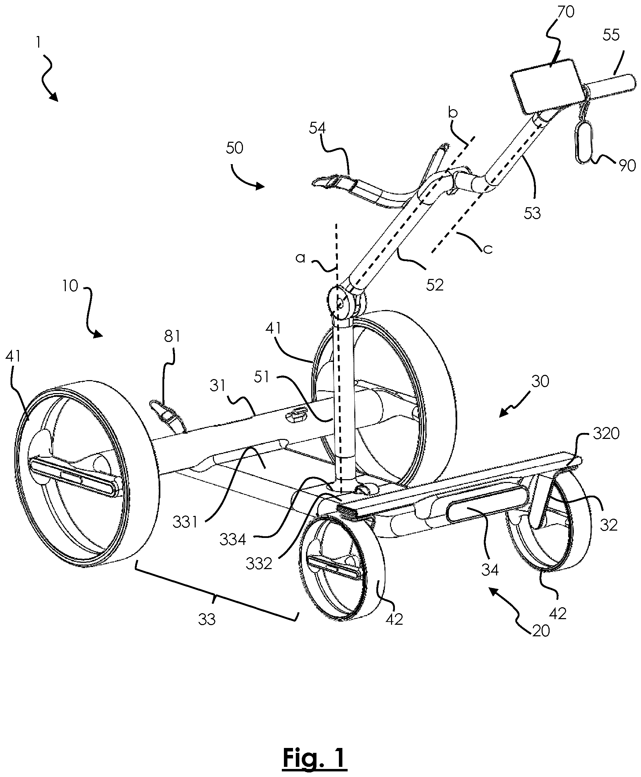

Fig. 1 illustrates an embodiment of a golf trolley 1 according to the invention. The golf trolley 1 comprises a first side 10 and a second side 20, which is opposed to the first side 10. The golf trolley 1 has a base frame 30, two drivable wheels 41, and two steerable wheels 42. A motor (not shown) is configured to drive the drivable wheels 41.

Before describing the golf trolley 1 in detail, some terms are defined. A ground plane shall be defined by the four contact points of the four wheels on the ground independently of the inclination of the ground. A horizontal plane is any plane being parallel to the ground plane. A horizontal direction is any direction in a horizontal plane. A driving direction is a horizontal direction which directs in the driving direction of the golf trolley 1, when the golf trolley goes straight forward or backward. A lateral direction shall be the horizontal direction being perpendicular to the driving direction. A vertical direction is a direction perpendicular to the horizontal plane. A length of a part is a dimension of the part in the driving direction, if not otherwise indicated. A width of a part is a dimension of the part in the lateral direction, if not otherwise indicated. A height of a part is a dimension of the part in the vertical direction, if not otherwise indicated. Indication like above, top, etc shall indicate the vertical direction away from the ground plane. Indications like below, bottom, etc shall indicate the vertical direction towards the ground plane. Indications like front, forward, etc shall indicate the driving direction from the first side to the second side. Indications like back, backward, etc shall indicate the driving direction from the second side to the first side.

The base frame 30 comprises, on the first side 10, a first frame part 31 holding the drivable wheels 41 and, on the second side 20, a second frame part 32 holding the steerable wheels 42.

The first frame part 31 extends between the drivable wheels 41 and/or extends in a lateral direction from the one drivable wheel 41 to the other drivable wheel 41. Preferably, the first frame part 31 extends along a straight line, preferably parallel to the ground plane and perpendicular to the driving direction or in the lateral direction. The first frame part 31 is preferably a hollow tube. Preferably, the motor is arranged in the first frame part 31 or hollow tube, preferably a first sub-motor for driving a first one of the drivable wheels on a first side with respect to the third frame part 33 and a second sub-motor for driving a second one of the drivable wheels on a second side with respect to the third frame part 33. The first frame part 31 or the hollow tube has preferably a constant cross-sectional shape over at least 50% of its width, preferably over at least 60% of its width, preferably over at least 70% of its width, preferably over the complete width of the first frame part 31. The hollow tube could be compressed in the region of the third frame part 33 to facilitate its connection. The cross-sectional shape of the hollow tube is preferably circular which is well adapted to host motors. The motor(s) can thus be inserted from the two ends of the hollow tube. In addition, standard tube parts can be used for its manufacturing. And finally, the design is very light and clear. Preferably, the first frame part 31 is arranged such that it includes the rotation axis of the drivable wheels 41, preferably concentrically to the center axis of the hollow tube or first frame part 31. However, it would also be possible to arrange the first frame part not around the rotational axis of the drivable wheels 41.

The first frame part 31 is preferably connected such to the third frame part 33 that the inner space of the first frame part 31 is connected to the inner space of the third frame part 33. This allows to connect the motor(s) in the first frame part 31 via a cable with a controller arranged in the third frame part 33. The hollow tube can be cut open on its lower side in the region where it crosses the third frame part and similarly the third frame part 33 is cut open on the top side, where it crosses the first frame part 31. Then the two parts are connected with their open parts, e.g. by glueing, welding, or other mechanical connections like screwing.

The drivable wheels 41 are rotatable around a rotation axis of the drivable wheels 41. Both drivable wheels 41 rotate around the same rotation axis. The drivable wheels 41 are connected on the two lateral ends of the first frame part 31. The drivable wheels 41 are connected with the motor such that the motor can drive the drivable wheels 41. Preferably, the motor comprises a first motor driving the first one of the drivable wheels 41 and a second motor driving the second one of the drivable wheels 42. This allows to drive the two drivable wheels 41 independently so that the golf trolley 1 can turn by driving the two drivable wheels 41 at different speeds. The drivable wheels 41 are not steerable, i.e. are not pivotable (except the rotation of the wheels around its wheel rotation axis).

The second frame part 32 is preferably arranged above the steerable wheels 42 and/or extends in a lateral direction from the one steerable wheel 42 to the other steerable wheel 42.

The steerable wheels 42 are supported by the second frame part 32. The steerable wheels 42 are configured to allow change their driving direction so that the golf trolley 1 can turn or change its direction. The steerable wheels 41 preferably change their direction passively. That means that the golf trolley 1 does not comprise an active steering mechanism for steering the steerable wheels 41, but that the steerable wheels 42 simply change their driving direction as defined by the speed difference between the drivable wheels 41. Preferably, the steerable wheels 42 are pivotable wheels which pivot/rotate around a steering axis. The steering axis is preferably perpendicular to the rotation axis of the steerable wheels 42 and/or extends in a vertical direction. The second frame part 32 comprises a support element 320 extending above the rotation axis of the steerable wheels 42, preferably above the steerable wheels 42 such that it can support the steerable/pivotable wheels 42 from the top. Preferably, the second frame part 32 extends in the lateral direction, i.e. parallel to the rotation axis of the drivable wheels 41. The support element 320 is realized here as a support plate which is parallel to the ground plane. However, other forms would be possible. The support element 320 supports a pivotable arm on each lateral end of the support element 320 such that the pivotable arm is pivotable around the steering axis. The pivotable arm extends downwards from the support element 320 and contains at its lower end a support for the steerable wheel 41 for rotatably supporting the steerable wheel 41 so that it can rotate around its rotation axis. Preferably, the support of the steerable wheel 41 in the pivotable arm is arranged such that the support point of the steerable wheel 41 in the pivotable arm is behind the steering axis (when the golf trolley moves straight forward). This description holds obviously for both steerable wheels 42 and both pivotable arms. This facilitates on the one side the steering (as usual for pivotable wheels) but allows further to pivot the two steerable wheels 42 by 90° inwards so that steerable wheels 42 protrude laterally from the second frame part 32 less then the radius of the steerable wheel 42. (when the steerable wheel 42 is arranged straight) the steering axis cuts preferably through the steerable wheels 42 in the center of the wheel 42 with respect to the lateral direction and/or extends through the wheel 42 in front of the rotation axis of the steerable wheel 42 with respect to the driving direction. The steerable wheels 42 have preferably a smaller diameter than the drivable wheels 41, preferably have a diametersmaller than 80% of the diameter of the drivable wheels 41, preferably smaller than 70% of the diameter of the drivable wheels 41.

The width of the second frame part 32 is smaller than the available width between the drivable wheels 41. The complete width of the second frame part 32 and the two steerable wheels 42 turned both 90° with the arm towards the third frame part 33 (such that the rotatable support point of the steerable wheels 42 turns towards the third frame part 33) is smaller than the width available between the drivable wheels 41. This allows to fold the second frame part 32 with the steerable wheels 42 between the drivable wheels 41 and/or on the first frame part 31.

The base frame 30 further comprises a third frame part 33 connecting the first frame part 31 and the second frame part 32. The third frame part 33 extends from the first side 10 to the second side 20 in the center between the drivable wheels 41 and/or in the center between the steerable wheels 42. The first frame part 31 and/or second frame part 32 extends perpendicular to the third frame part 33. The width (dimension in lateral direction) of the third frame part 33 is smaller than the width of the first frame part 31 and/or the second frame part 32. The width of the third frame part 33 is preferably less than 90%, preferably less than 80%, preferably less than 70%, preferably less than 60% of the width of the first and/or second frame part 31, 32. As a consequence, the first and second frame part protrudes from the third frame part 33 in the lateral directions and support on each lateral end one of the four wheels 41, 42. This leads to a type of H-form of the base frame with the two parallel first and second frame parts 31, 32 for supporting the wheels 41, 42 connected by the perpendicular third frame part 33. This base frame 30 structure is very light and space saving.

The third frame part 33 has preferably a constant cross-sectional shape over more than 50%, preferably more than 60%, preferably more than 70%, preferably more than 80%, preferably more than 90% of the longitudinal axis of the third frame part 33. The cross-sectional shape is preferably rectangular with a height smaller than its width, preferably with a height being less than 50% of the width, preferably less than 40% of the width, preferably less than 30% of the width of the third frame part 33. The rectangular shape shall also include rectangular with rounded edges or with rounded smaller sides. In other words, the rectangular shape has on the top side and bottom side a straight line/surface, while the form of the lateral side is quite arbitrary. Obviously other cross-sectional shapes than rectangular are also possible.

The third frame part 33 is preferably realized by a hollow tube. This allows to use standard tube profile, e.g. the above-mentioned rectangular tube profile to realize the third frame part 33. The complete third frame part 33 or the hollow tube can be realized only by a tube or by a tube in combination with other parts. For example, the end of the third frame part 33 on the second side 20 could be realized by a end piece attached to the hollow tube to hold the sensor 34 and/or the second frame part 32. The third frame part 33 or the hollow tube can also be realized by two or more tubes connected by a connector piece 334. This allows in the shown embodiment to realize the third frame part 33 by a first frame sub-part 331 and a second frame sub-part 332 which are connected by a connected 334 allowing to fold the third frame part 33, i.e. to fold the first frame sub-part 331 on the second frame sub-part 332 as will be explained in more detail below. However, two tubes could also be used for other reasons than for folding, e.g. to realize the bended portion to avoid to bend the tube and make a bended connector piece out of plastic.

The third frame part 33 hosts preferably some electronic components of the golf trolley 1. The third frame part 33, preferably the first frame sub-part 331 contains preferably the battery. The battery is inserted preferably from the first side 10 in the third frame part 33, preferably in the hollow tube 33. The third frame part 33, preferably the second frame sub-part 332 further comprises preferably the controller for controlling the motor(s) 80 to drive the drivable wheels 41. The third frame part 33, preferably the second frame sub-part 332 comprises preferably at the front end or the second side 20 of the third frame part 33 a sensor 34 for autonomously driving the golf trolley 1. The components will be described in more detail below.

The third frame part 33 is preferably arranged below the first frame part 31. This has the advantage that the battery hosted on the first side 20 of the third frame part 33 has the lowest possible center of gravity. The second frame part 32 is preferably arranged above the third frame part 33, because the (smaller) steerable wheels 42 are supported by the second frame part 32 from the top, while the first frame part 31 is arranged preferably at the height of the rotation axis of the drivable wheel.

The third frame part 32 is preferably arranged lower on the first side 10 than on the second side 20. This is again due to the higher position of the second frame part 32 and/or due to the preferred higher position of the sensor 34. The third frame part 33 extends on the first side preferably horizontally, i.e. parallel to the ground area in the driving direction towards the second side and turns then inclined upwards at the second side. The horizontal extension is over the driving direction (starting from the first side) at least 50% of the length of the third frame part 33, preferably at least 60%. With a hollow tube, the tube can extend horizontally in the horizontal portion and then bend upwards to continue then an inclined direction upwards towards to the second side 20. The inclined portion (after the bending) is preferably again straight. However, other forms of the third frame part 32 are possible. For example, the third frame part 32 could extend from the first side 10 to the second side 20 along a straight line in a slightly inclined direction. It would also be possible to realize the inclined portion after the horizontal portion in a different shape, e.g. a kind of S-shape or a step.

As already mentioned above, the third frame part 33 comprises preferably a first frame sub-part 331 on the first side 10 and a second frame sub-part 332 on the second side 20 connected by a connector 334 which allows the folding of the third frame part 33 as explained in more detail below. As shown in fig. 1, the third frame part 33 may be arranged lower on the first side 10 than on the second side 20. In this example, the first frame sub-part 331 lies on a horizontal plane below the first frame part 31 which includes the rotation axis of the drivable wheels 41. The second frame sub-part 332 extends coplanar with the first frame sub-part 331 on the first side 10, and it is raised upwards on the second side 20, in proximity to the steerable wheels 42 and the second frame part 32.

The golf trolley 1 further comprises a bag support 50 extending from the base frame 30. For example, the bag support 50 may be connected to the third frame part 33.

The bag support 50 is configured to hold a golf bag (not shown) in a holding position. In the holding position, the golf bag is inclined with the golf bag's lower end on the first side 10 of the golf trolley 1 and with the golf bag's upper end on the second side 20 of the golf trolley 1.

The bag support 50 is realized preferably by a tube/bar extending along a single line (a, b, c). This makes the bag support 50 or the golf trolley 1 very light.

The bag support 50 may further comprise one or more holding means 54. In the shown example, the holding means 54 are provided on the second support sub-part 52 of the bag support 50. The holding means 54 are configured to hold the golf bag. For example, the holding means 54 may be configured to hold a central part and/or an upper part of the golf bag. In the shown example, the holding means 54 comprise two arms extending from bag support 50, preferably from the tube or from the second support sub-part 52. The two arms have a curved shape, which allows to partially surround the golf bag in use and retain the golf bag more stably.

The golf trolley 1 may comprise second holding means 81 configured to hold a lower part of the golf bag. The second holding means 81 may e.g. be a flap, a tab, a part of the base frame 30, preferably attached to the first side 10 of the third frame part 33 or to the first frame part 31. In the shown example, the second holding means 81 comprises a tab attached to the first frame part 31. The tab may comprise an aperture for receiving one or more elastic bands. The elastic bands can be passed through the aperture of the tab, wrapped around the golf bag, and secured to the holding means 54. This allows to retain the golf bag more firmly.

The bag support 50 (preferably the tube/bar) is connected to the third frame part 33 between first frame part 31 and the second frame part 32. This is quite a unique arrangement of the bag support 50 (which are in the state of the art normally arranged at the first or second side 10 or 20 of the base frame 30) which is particularly advantageous for increasing the stability of the golf trolley 1. Since the leverage point of the weight of the golf bag, especially of the heavy club head having the biggest leverage force, attacks in the centre of the four wheels 41, 42 and not close to one of the rotation axes of the four wheels 41, 42, the leverage force of the weight of the bag on the golf trolley 1 as a whole is reduced. This is because the stabilizing leverage force is increased by the fact that the leverage point of the golf bag is farther away from the rotation axis of the steerable wheel around which the golf trolley 1 would fall over in case of loss of stability. Thus, the golf trolley 1 with the inverted inclination direction of the golf bag is particularly stable with the bag support 50 arranged in the centre.

The bag support 50 may comprise one or more sub-parts 51, 52, 53. In the shown example, the bag support 50 comprises a first support sub-part 51, a second support sub-part 52, and a third support sub-part 53. The support sub-parts 51, 52, 53 may extend in different directions a, b, c and may comprise bending portions or change of directions.

The first support sub-part 51 has a lower end (also called first end) connected to the third frame part 33 and extends in a first direction a upwards from the third frame part 33. The first direction a is preferably a vertical direction. However, it would also be possible to have a slight inclination towards the front or back of the golf trolley 1. The first support sub-part 51 is coupled to the third frame part 33 at a position 334 that is located between the first frame 331 part and the second frame part 332, on a center axis between the drivable wheels 41 and the steerable wheels 42.

The second support sub-part 52 extends from its first end to its second end in a second direction b upwards and towards the second side 20 of the golf trolley 1. The second direction b is parallel to the golf bag in the holding position. The first end of the second support sub-part 52 is connected to the upper end (also called second end) of the first support sub-part 51 and the second end of the second support sub-part 52 is connected to a first end of the third support sub-part 53. The second direction b is more inclined than the first direction (compared to the vertical direction). In other words, the second direction b has an angle with the ground plane which is smaller than the angle of the first direction a with the ground plane. The second direction b has preferably an angle with the ground plane between 70° and 20°, preferably between 60° and 30°. The second support sub-part 52 is preferably configured to hold the bag in the holding position. Preferably the second support sub-part 52 has therefore the holding means 54 already mentioned above. Preferably, the second direction b is parallel to the longitudinal axis of the golf bag in its holding position. In other words, the second direction b extends in a direction which points towards the second holding means 81. Such a direction gives the golf bag further support. However, also other second directions b are possible. The (first end of the) second support sub-part 52 is preferably connected via a connection part with the (second end of the) first support sub-part 51. The connection part allows preferably to pivot the second support sub-part 51 with respect to the first support sub-part 51 in order to allow to align the two sub-parts 51, 52 parallel to each other in a folded state. In one embodiment, the connection part can be locked in a first angle which defines the above-described angle of the first and second sub-parts 51, 52 in the operating state and in a second angle which defines a second angle for the folded state (without the possibility to lock any other angles or at least some few binary angle positions). However, the connection part can also be realized to fix any angle, e.g. by a screw fixation.

The third support sub-part 53 is preferably configured to have a handle 55 to pull or push the golf trolley 1 (e.g. in case of malfunction or empty battery) and/or to hold a display 70. The third support sub-part 53 extends from its first end to its second end in a third direction c. At its first end, the third support sub-part 53 is connected to the second support sub-part 52. The connection between 52 and 53 allows to change the height of the handle 55. In this realization, by a rotatable connection between the sub-parts 52 and 53. In Fig. 1, the third support sub-part 53 rotates at its first end around a laterally orientated rotation axis so that the third direction c of the third support sub-part changes its angle with respect to b. The rotational connection is here realized by bending the second end of the second support sub-part 52 by 90° to a lateral side which serves as rotational support to rotationally hold a connection piece which holds then third support sub-part 53. The rotatable connection between the two sub-parts 52, 53 can also be used to fold the two parts in its folded state (explained later), even though also other folding mechanisms are possible than the described one. The first end of the third support sub-part 53 comprises a bend as mentioned above. The bend is not only for realizing the rotational support but allows also in the folded state to arrange the third sub-part 53 on the lateral side of the first and/or second sub-part 51, 52. At its second end, the third support sub-part 53 comprises the handle 55 for pulling or pushing the golf trolley. The height of the handle 55 can be changed by rotating the third support sub-part 53 with respect to the second support sub-part 52. At its second end, the third support sub-part 53 comprises a display 70. The display 70 may be detachable. For example, the third support sub-part 53 may comprise at its second end mounting means configured to receive a display 70. The display may be for instance a tablet, a smartphone or the like. The display 70 may be connected wirelessly or by a wired connection to a controller for controlling the golf trolley 1. The controller may comprise a remote device 90 to control the golf trolley 1 from the distance.

The sub-parts 51, 52 and/or 53 are realized such that they can fold between each other and/or change their orientation angle. It is obviously also possible to realize them so that two or all three of the sub-parts 51, 52, 53 have a fixed angle in the operating state or even that they cannot be folded. The sub-parts 51, 52, 53 could be realized by a single tube which shows the form of the two or three sub-parts 51, 52 and eventually 53 (direction a, then b and eventually c). It is also possible to arrange each two or three of the sub-parts 51, 52, 53 by a distinct hollow tube which are then connected by connectors in between them (e.g. to realize the functions described above). Even if the bag support 50 is realized by an assembly of different tubes, it still realizes a tube design which follows a single line (a then b then c) as described above.

The golf trolley 1 is realized preferably by a combination of tubes. A first tube for the first frame part 31, at least one second tube realizing the third frame part 33 and at least one third tube realizing the bag support 50. The first tube contains the motor(s) 80 and the at least one second tube contains the battery. The at least one third tube could be used to guide inside the cable from the controller (hosted for example in the at least one second tube) to the display 70. The tubes are preferably made of metal, preferably in aluminum. However, it would also be possible to realize them in carbon or plastic. The connectors are preferably realized in plastic.

The golf trolley 1 or its controller is configured to control the motor 80 to drive the drivable wheels 41 to move along a desired itinerary. The desired itinerary can be controlled by a user input, e.g. via the display 70 of the remote control 90. The user input could be the direct orders to go straight, to turn, etc. The forward direction of the golf trolley 1 is preferably the second side 20. However, in a less preferred embodiment, the forward direction could also be the first side 10.

In a preferred embodiment, the golf trolley 1 or the controller is configured to autonomously drive the golf trolley 1 based on a sensor 34 and/or based on location data (e.g. GPS, triangulation data, etc.) and/or based on maps of the golf court. Autonomously driving shall mean that the controller can decide change of directions without the interference of the user on the remote control. This can be realized for example by a follow mode which causes the trolley 1 to follow a user/golfer at a certain distance. This can be realized by a distance sensor realized by a transmission from the remote control carried by the user to follow. However, preferably this is achieved by the sensor 34 which identifies the user and measures its distance. This is preferably realized by a stereo camera which allows on the one hand side to detect a human or even a specific user using Al algorithms in the camera image and then to detect the distance of the detected human based on the stereo images. This allows then to control the speed and direction of the user based on the distance measured to the user detected in the image. Another autonomous drive mode would be to send the golf trolley 1 to a certain location, e.g. by touching the display 70 showing a map in order to indicate a location where the golf trolley 1 shall move. In this case, the golf trolley 1 can move to the certain location using its current location and a map of the golf court. The user input received at the display 70 or the remote control 90 could also be a desired location on the golf court where the golf trolley 1 shall autonomously drive or a follow mode activation. The current design of the golf trolley 1 is particularly well suited for autonomous golf trolleys 1 which need to master difficult terrain and require a very good stabilization.

In fig. 1, the golf trolley 1 is illustrated in an operating state. The golf trolley 1 may be foldable from an operating state to a folded state. For example, the base frame 30 and/or the bag support 50 may be foldable at one or more folding positions.

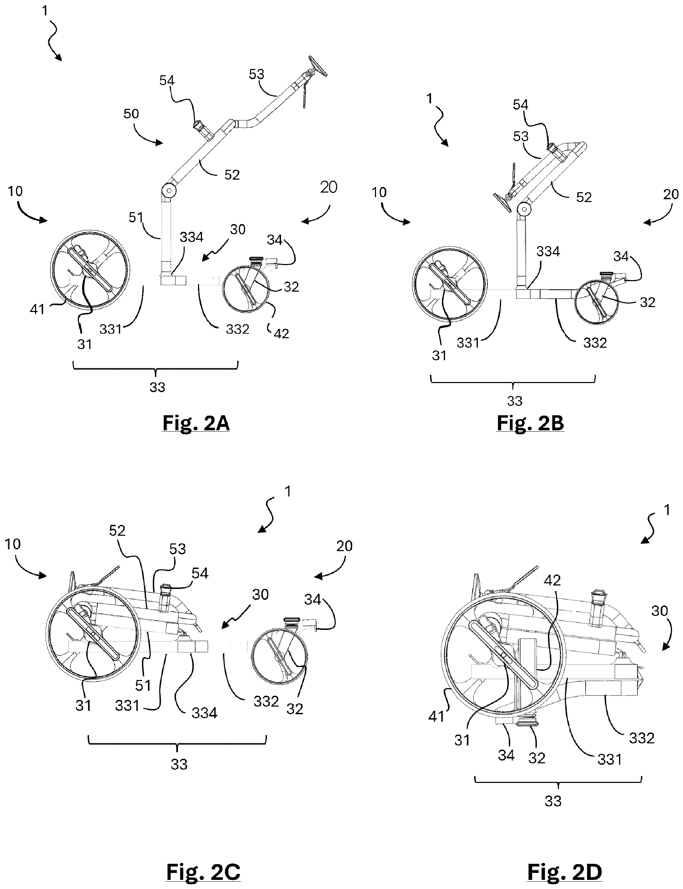

Figs. 2A-2D illustrate four states of a foldable golf trolley 1. In this example, the golf trolley 1 can be reversibly and progressively folded from its operating state (fig. 2A) to the intermediate states of fig. 2B and fig. 2C, and finally to the state of fig. 2D (also called the fully folded state).

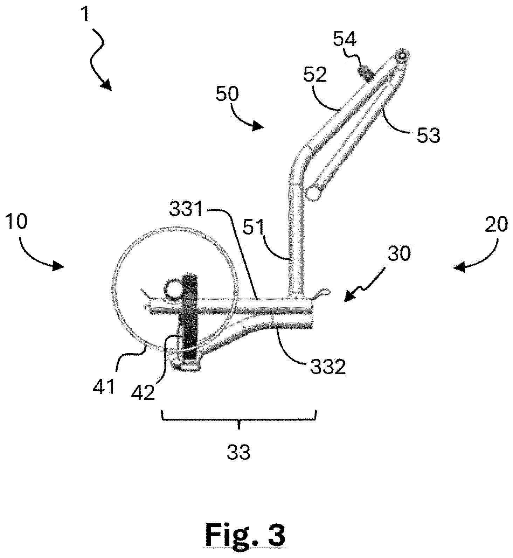

In the shown example, the bag support 50 is foldable. As shown in figs. 2A-2B, the third support sub-part 53 of the bag support 50 can be brought in its folded position by bringing it (substantially) parallel to the second support sub-part 52. Preferably, the folding is realized in this realization by pivoting the third support sub-part 53 relative to the second support sub-part 52, preferably about a rotation axis that is parallel to a rotation axis of the drivable wheels 41. However, it is clear that the rotation axis could be arranged differently as well. In the shown example, the third support sub-part 53 is pivotable at a folding position that is close to a bend located at the first end of the third sub-part 53. When folded, the third sub-part 53 is folded on top of the second support sub-part 52 and the third sub-part 53 is arranged between the two arms of the holding means 54. However, the third sub-part 53 may also be pivotable so that it is folded under the second support sub-part 52 (fig. 3).

As shown in fig. 2C, the second support sub-part 52 (together with the folded third support sub-part 53) may be foldable on the first support sub-part 51 so that they are (substantially parallel). In the shown example, the first end of the second support sub-part 52 and the second end of the first support sub-part 51 are rotatably connected by a hinge. The second support sub-part 52 is foldable by pivoting the second support sub-part 52 about the hinge axis towards the first support sub-part 51. In this example, the second support sub-part 52 folds towards the first support sub-part 51 on the second side 20. As shown, the first sub-part 51 may also be foldable.

As also shown in Fig. 2C, the first support sub-part 51 (together with the folded second and third support sub-part 52, 53) may be foldable on the base frame 30 by pivoting said first support sub-part 51 towards the first frame sub-part 331 on the first side 10. The lower end of the first support sub-part 51 is pivotable arranged at the first frame sub-part 331 close to the frame folding position of the third frame part 33 so that the maximum length of the first frame sub-part 331 can be used to fold the bar support 50 on it. This is the reason that the length of the support sub-parts 51, 52, 53 (in the folded state) are equal (or at least similar) to the length of the first frame sub-part 331.

Fig. 2D illustrates how the base frame 30 or the third frame part 33 is folded by pivoting the second frame sub-part 332 towards the first side 10 of the golf trolley 1, preferably under the first frame sub-part 331 or the other side compared to the folded bag support 50. When the base frame 30 is folded, the steerable wheels 42 are arranged within the width of the first frame part 31. In the folded state, the steerable wheels 42 may be pivoted around their steering axis towards the third frame part 33. In the shown example, the steerable wheels 42 are pivoted such that the wheel axis of the steerable wheels 42 and the wheel axis of the drivable wheels 41 are perpendicular. This allows to align the steerable wheels 42 with the first frame part 31. This is thus space-saving and it also allows to block the steerable wheels 42 to avoid pivoting in all directions.

The order of the folding steps can be changed arbitrarily. In Fig. 3 the golf trolley 1 is folded first in the base frame 30 and only then the first support sub-part 51 is folded on the base frame 30. The golf trolley 1 of Fig.3 is slightly different. In this example, the third sub-part 53 of the bag support 50 is pivotable relatively to the second support sub-part 52 and is folded under the second support sub-part 52, which means that this folding direction of the third support sub-part 53 is opposite to the folding direction of the third support sub-part 53 of figs. 2B-2D.

In the shown example, the third frame part 33 is foldable by pivoting the second frame sub-part 332 towards the first side 10 of the golf trolley 1 under the first frame sub-part 331, similarly to the third frame part 33 of figs. 2B-2D. However, other folding configurations are possible, e.g. having the second frame sub-part 332 foldable on top of the first frame sub-part 331 or both frame sub-parts 331, 332 being simultaneously pivotable, e.g. towards the bag support 50.

The golf trolley 1 may comprise a first locking mechanism configured to prevent the relative rotation or folding of the bag support 50 (particularly, the first support sub-part 51) with respect to the base frame 30 (particularly, the third frame part 33) and/or a second locking mechanism configured to prevent relative rotation or folding of the first frame sub-part 331 with respect to the second frame sub-part 332.

The golf trolley 1 may comprise a common locking mechanism configured to lock the bag support 50 and the third frame part 33 in the operating state and to unlock them in the folded state. The common locking mechanism may be arranged for instance in the third frame part 33 and/or in the bag support 50.

The locking mechanism for the folding the bag support 50 and for folding the third frame part 33 (the common locking mechanism or the first and second locking mechanism) can comprise a common activation member 63 to unlock the locking mechanism.

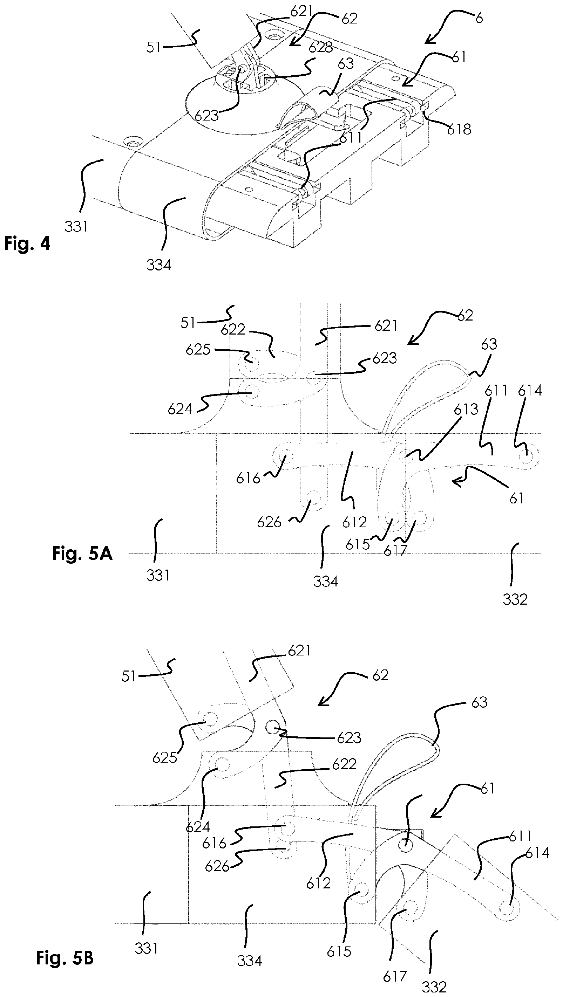

Figs. 4, 5A-5B schematically illustrates an exemplary folding mechanism 6 for folding the bag support 50 and the third frame part 33. In the shown example, the folding mechanism 6 is arranged at the frame folding position 334 of the third frame part 33. This is possible, because the bag support 50 is connected to the third frame part 33 at the frame folding position 334. The folding mechanism 6 comprises a first folding mechanism 61 for folding the third frame part 33 and a second folding mechanism 62 for folding the bag support 50 with respect to the base frame 30 or third frame part 33.

The first folding mechanism 61 is preferably realized as a hinge with a movable rotation axis (so that the rotation axis can be hidden within the third frame part 33 and nevertheless fold the first and second frame sub-part 331, 332 parallel or nearly parallel. This can be realized for example by two L-shaped elements 611 and 612. The first L-element 611 is supported rotatably with a first distal end in the first frame sub-part 331 (here with the pin 615) and supported rotatably with a second opposed distal end in the second frame sub-part 332 (here with the pin 614). The second L-element 612 is supported rotatably with a first distal end in the first frame sub-part 331 (here with the pin 616) and supported rotatably with a second opposed distal end in the second frame sub-part 332 (here with the pin 617). The two L-elements 611, 612 are connected together at their angle point so that they can rotate to each other around this angle point (here via pin 613). Preferably, the supporting points of the L-elements 611, 612 are supported such that they can rotate and translate in at least one direction in a guide rail. Fig. 4 shows for example the guide rail 618 of the pin 614 which allows the pin 614 to move horizontally. The pin 615 of the first L-element 611 and/or the pin 617 of the second L-element 612 allow preferably a vertical movement and/or is/are arranged in a (vertical) guide rail 628. The pin 616 can preferably move horizontally in the first frame sub-part 331. Fig. 5A shows the first folding mechanism 61 in the unfolded state and the hinging axis 613 is arranged within the third frame part 33. In this position, the first folding mechanism 61 is preferably locked by the first locking mechanism or the common locking mechanism. Fig. 5B shows the first folding mechanism 61 in the unlocked state and/or during a folding movement. It can be seen that the rotation axis 613 of the hinging axis of the first folding mechanism 61 moves downwards (preferably until the lower border of the first frame part or beyond in order to allow to fold the second frame sub-part 332 back to the first side 10 in the completely folded state as can be seen in Fig. 2D. Due to the width of the third frame part 33, the described hinge is actually arranged twice in the third frame part 33 in order to have a stable folding.

The second folding mechanism 62 is preferably realized as a hinge with a movable rotation axis (so that the rotation axis can be hidden within the bag support 50 and nevertheless fold the base frame 30 and the bag support 50 parallel or nearly parallel. This can be realized for example by two L-shaped elements 621 and 622. The first L-element 621 is supported rotatably with a first distal end in the base frame 30, preferably in the third frame part 33, preferably in the first frame sub-part 331 (here with the pin 624) and supported rotatably with a second opposed distal end in the bag support 50 (here with a pin which is not shown). The second L-element 622 is supported rotatably with a first distal end in the third frame part 33 (here with the pin 626) and supported rotatably with a second opposed distal end in the bag support 50 (herewith the pin 625). The two L-elements 621, 622 are connected together at their angle point so that they can rotate to each other around this angle point (here via pin 623). Preferably, the supporting points of the L-elements 621, 622 are supported such that they can rotate and translate in at least one direction in a guide rail. A guide rail in the third frame part 33 allows the pin 624 to move horizontally. The pin 625 of the second L-element 622 allow preferably a horizontal movement and/or is/are arranged in a (horizontal) guide rail. The pin 626 can preferably move vertically in the third frame part 33. Fig. 5A shows the second folding mechanism 62 in the unfolded state and the hinging axis 623 is arranged within the bag support 50. In this position, the second folding mechanism 62 is preferably locked by the second locking mechanism or the common locking mechanism. Fig. 5B shows the second folding mechanism 62 in the unlocked state and/or during a folding movement. It can be seen that the rotation axis 623 of the hinging axis of the first folding mechanism 61 moves towards the first side 10 or to the side to which the bag support 50 is folded (preferably until the left (or direction towards the first side) border of the bag support 50 or beyond in order to allow to fold the bag support 50 back to the first side 10 in the completely folded state as can be seen in Fig. 2D.

In the shown embodiment, the common activation member 63 can unlock the first and second folding mechanisms 61, 62, preferably via a common locking mechanism (here by pulling the strap 63). However, it would be also possible to have two distinct locking mechanism which would allow to unlock the first and second folding mechanism one after the other, e.g. by pulling the strap 63 or activating the common activation member in a first direction to unlock the first folding mechanism 61 and/or in a second direction to unlock the second folding mechanism 62.

In the shown embodiment, the first and second folding mechanism 61, 62 and the locking mechanism (with the activation member 63) are arranged in a part which can be connected to a tube of the first frame sub-part 331, to a tube of the second frame sub-part 332 and to a tube of the bag support 50. This piece is preferably realized in plastic (while the tubes are preferably realized in metal, preferably aluminum, or carbon).

The base frame 30 or a portion of the base frame 30 (e.g., the first frame sub-part 331 or the second frame sub-part 332) may be hollow. A (at least partially) hollow base frame 30 comprises one or more compartments configured to house one or more components such as a battery 60, a controller and the like. These components can be inserted into the base frame 30 for instance by sliding them into place. The components may be equipped with a pull tab, allowing to facilitate insertion and/or removal.

For example, a controller may be arranged in the base frame 30, preferably in the second frame sub-part 332. The controller arranged in the base frame 30 may be connected to the display 70 via a cable. For example, the cable may be routed from the display 70 inside the bag support 50 towards the base frame 30. In this case, the bag support 50 is also hollow, for example, it may be a tube, e.g. a metal tube.

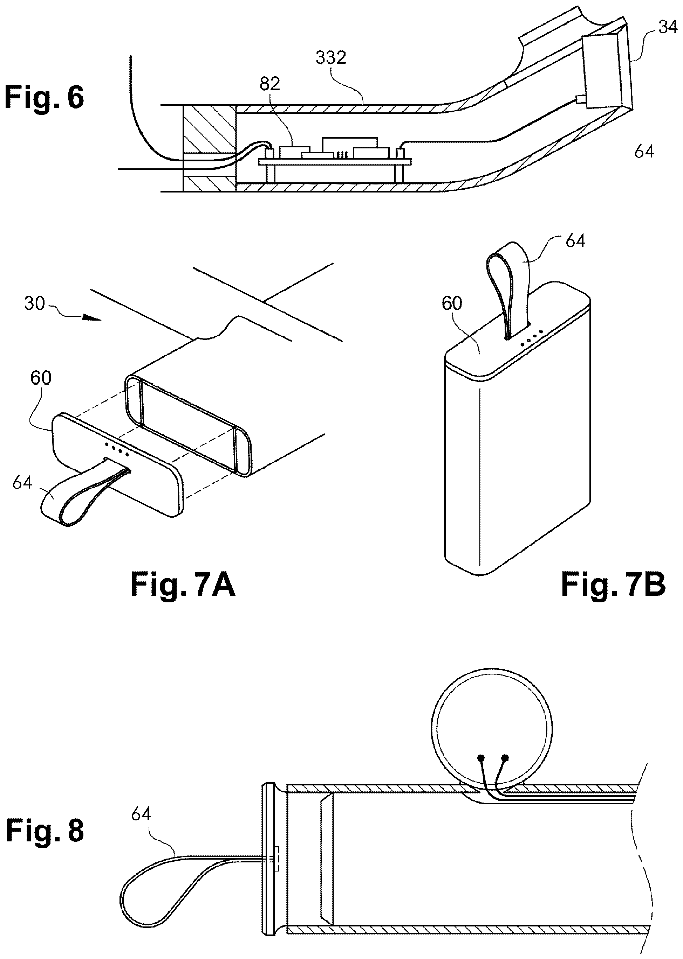

Fig. 6 is a sectional view of the second frame sub-part 332. In this example, the second frame sub-part 332 is hollow and houses the controller 82 and a camera 34. In the shown example, the controller 82 is a printed board circuit (PCB). A first cable is routed from the PCB towards the camera 34 via a compartment in the second frame sub-part 332. A second cable may be routed from the PCB towards a display (not shown) e.g. via a conduit within the bag support 50. A third cable may be routed from the PCB towards a battery (not shown) e.g. via a compartment within the first frame sub-part 331. In this example, the second frame sub-part 332 comprises a top surface and a hinged panel which can be opened upwards. When closed, the panel is flush with the top surface of the second frame part 32. The panel can be opened to allow easy access to the camera 34.

The golf trolley 1 may comprise a battery 60. For example, the battery 60 may be a rechargeable battery.

As shown in figs. 7A-7B, the battery 60 may be housed in a compartment within the base frame 30. The battery 60 may be slidably insertable and removable from the base frame 30. A pull tab 64 may be attached to the battery casing, on a side of the battery casing that faces outward when the battery 60 is inserted in the base frame 30. The pull tab 64 extends slightly beyond the base frame 30when the battery 60 is fully inserted in the base frame 30, making it easy to grip and pull the battery 60 out when needed, e.g. for charging or replacement purposes.

Fig. 8 shows a battery 60 that is insertable from the first side 10 of the golf trolley 1 in the first frame sub-part 331. The first frame sub-part 331 may extend below the rotation axis of the drivable wheels 41. In this case, the centre of gravity of the battery 60 is below the rotation axis of the drivable wheels 41 when the battery is inserted. The battery 60 may be a battery pack comprising multiple battery cells (e.g. prismatic cells, pouch cells, cylindrical cells) that are connected to each other in series or in parallel. The battery pack may further comprise a battery management system (BMS).

The golf trolley 1 may further comprise a motor 80. The motor 80 is configured to cause the drivable wheels 41 to rotate, which allows to propel the golf trolley 1. The motor 80 may be functionally connected to the drivable wheels 41 via a transmission. The motor 80 may be arranged in the base frame 30, for example in the first frame part 31. This allows to reduce the distance between the motor 80 and the drivable wheels 41, and to simplify the transmission between the motor 80 and the drivable wheels 41.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

The actions performed by the controller can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. Golf trolley comprising a base frame (30), two steerable wheels (42), two drivable wheels (42) and a motor (80) configured to drive the drivable wheels (42), the golf trolley (1) comprising a first side (10) and a second side (20) opposed to the first side (10), the base frame (30) comprising on the first side (10) a first frame part (31) holding the drivable wheels (42) and on the second side (20) a second frame part (32) holding the steerable wheels (42), wherein the base frame (30) comprises a third frame part (33) connecting the first frame part (31) and the second frame part (32), the golf trolley (1) further comprising a bag support (50) extending from the base frame (30) and arranged to hold the golf bag (1) in a holding position, wherein the golf trolley (1) is designed such that the golf bag in the holding position is arranged in an inclined position with the golf bag's lower end on the first side (10) of the golf trolley and with the golf bag's upper end on the second side (20) of the golf trolley.

2. Golf trolley according to claim 1, wherein the golf trolley (1) is foldable from an operating state in a folded state, wherein the third frame part (33) comprises a first frame sub-part (331) on the first side (10) of the golf trolley (1) and a second frame sub-part (332) on the second side (20) of the golf trolley (1), wherein the first frame sub-part (331) is foldable connected at a frame folding position (334) with the second frame sub-part (332), wherein the third frame part (33) is folded in the folded state such that the second side (20) of the third frame part (33) or base frame (30) is folded towards the first side (10) of the third frame part (33) or base frame (30) and/or such that the steerable wheels (42) are arranged in contact with the first frame part.

3. Golf trolley according to claim 2, wherein, in the folded state, the steerable wheels (42) are pivoted around a steering axis towards the third frame part (33), preferably with their wheel axis perpendicular to the wheel axis of the drivable wheels (42), and/or are arranged within the width of the first frame part (31) in the direction of the rotation axis of the drivable wheels (42).

4. Golf trolley according to any one of claims 2 to 3, wherein the bag support (50) is folded in the folded state of the golf trolley (1) on the first or second frame sub-part (331, 332).

5. Golf trolley according to claim 4, wherein the bag support (50) is connected to the third frame part (33) at the frame folding position (334).

6. Golf trolley according to claim 4 or 5, wherein the bag support (50) is folded, in the folded state of the golf trolley (1), on top of the first frame sub-part (331) and the second frame sub-part (332) is folded below the first frame sub-part (331).

7. Golf trolley according to claim 6, wherein the bag support (50) and the third frame part (33) are locked in the operating state with a locking mechanism, wherein the locking mechanism comprises a common activation member (63), wherein the common activation member (63)is configured to unlock a first folding mechanism (61) to allow the folding of the first and second frame sub-part (331, 332), wherein the common activation member (63) is configured to unlock a second folding mechanism (62) to allow the folding of the bag support (50) with respect to the third frame part (33).

8. Golf trolley according to any one of claims 2 to 7, wherein the bag support (50) is folded in the folded state in two or more support sub-parts (51, 52, 53) which are folded on the first or second frame sub-part (331, 332).

9. Golf trolley according to any one of claims 1 to 8, wherein the third frame part (33) extends from the first side (10) to the second side (20) in the center between the drivable wheels (42) and/or in the center between the steerable wheels (42), wherein the first frame part (31) extends perpendicular to the third frame part (33) parallel to the rotation axis of the drivable wheels (42) protruding from the third frame part (33), wherein the second frame part (32) extends perpendicular to the third frame part (33) parallel to the rotation axis of the drivable wheels (42) protruding from the third frame part (33), and wherein the width of the third frame part (33) in a direction parallel to the rotation axis of the drivable wheels (42) is less than seventy percent of the width of the first frame part (31) and/or is less than seventy percent of the width of the second frame part (32).

10. Golf trolley according to claim 9, wherein the third frame part (33) is a hollow tube with constant cross-sectional surface over more than sixty percent of a length of the third frame part (33) from the first side (10) to the second side (20), wherein the first frame part (31) is a hollow tube with a constant cross-sectional surface over more than fifty percent of the width of the first frame part, wherein the first frame part (31) housing the motor (80) for driving the drivable wheels (42).

11. Golf trolley according to claim 9 or 10, wherein the bag support (50) is a tube extending from the third frame part (33) upwards, wherein the tube comprises a holding means for holding a central and/or upper part of the golf bag so that the golf bag remains in the holding position.

12. Golf trolley according to any one of claims 1 to 11, wherein the third frame part (33) is arranged under the first frame part, wherein a battery (60) of the golf trolley (1) is arranged in the third frame part (33), and wherein the center of gravity of the battery (60) is below the rotation axis of the drivable wheels (42).

13. Golf trolley according to any one of claims 1 to 12, wherein a battery of the golf trolley is arranged in the third frame part (33), and wherein the battery is insertable from the first side (10) of the golf trolley in the third frame part (33).

14. Golf trolley according to any one of claims 1 to 13, wherein the bag support (50) is connected to the third frame part (33) in the center between the first and second frame part (31, 32).

15. Golf trolley according to claim 14, wherein the bag support (50) is realized as tube or bar extending along a single line first in a first support direction (a) and then in a second support direction (b), wherein the tube or bar comprises a first support sub-part (51) and a second support sub-part (52), the first support sub-part (51) having a lower end connected to the third frame part (33), the first support sub-part (51) having an upper end connected to the second support sub-part (52), wherein the first support sub-part (51) extends in a first support direction (a) upwards, wherein the second support sub-part (52) extending in the second support direction (b) from the upper end of the first support sub-part (51) upwards and towards the second side (20) of the golf trolley (1), wherein the second support sub-part (52) comprises holding means (54) for holding the golf bag in the holding position.
